# FASCICULE DE BREVET EUROPEEN

(11) **EP 1 349 431 B1**
(45) Date de publication et mention de la délivrance du brevet: **25.05.2005**
(21) Numéro de dépôt: 02290769.5
(22) Date de dépôt: 27.03.2002
(51) Int. Cl.: H05B 6/02, H05B 6/16, C21D 9/56, C21B 7/10

(54) **Enceinte d'étanchéité au gaz et au vide d'isolation thermique destinée à un dispositif de chauffage par induction**
Vakuum- und gasdichter Behälter zur thermischen Isolierung von Induktionsheizeinrichtungen
Vacuum and gas tight thermal insulating enclosure for induction heating apparatus

(43) Date de publication de la demande: 01.10.2003
(73) Titulaire: Celes, F-68610 Lautenbach (FR); USINOR, 92800 Puteaux (FR)
(72) Inventeur: Uring, Jean-Camille, 68000 Colmar (FR); Hellegouarc'h, Jean, 94170 Le Perreux sur Marne (FR); Couffet, Claude, 29160 Crozon (FR); Chaignot, Jean-Philippe, 90000 Belfort (FR); Roehr, Philippe, 68610 Lautenbach (FR); Anderhuber, Marc, 57140 Saulny (FR); Griffay, Gérard, 57280 Hautconcourt (FR); Hug, Patrick, 57280 Feves (FR); Pierret, René, 57050 Metz (FR); Daubigny, Alain, 54190 Villerupt (FR)
(74) Mandataire: Peaucelle, Chantal

(56) Documents cités:
- WO-A-00/52965
- GB-A- 1 439 137
- GB-A- 2 155 740

## Description

La présente invention est relative au chauffage par induction électromagnétique d'un produit métallique défilant en continu sous atmosphère protectrice ou sous vide.

L'utilisation de dispositifs de chauffage par induction électromagnétique pour le traitement thermique sous atmosphère protectrice telle que mise en oeuvre dans les lignes de revêtement à chaud (galvanisation, aluminiage, etc...) ou les lignes de traitement thermique en continu (lignes de recuit, par exemple) est connue depuis longtemps.

On utilise généralement deux types de dispositifs de chauffage par induction pour ces installations : celui à flux longitudinal (l'inducteur est constitué de plusieurs spires parcourues par du courant et qui entourent le produit défilant de manière à créer un flux magnétique dans la direction de défilement du produit) et celui à flux transverse (les spires de l'inducteur sont disposées dans un plan parallèle à la surface du produit de sorte que le flux magnétique est perpendiculaire à cette surface).

L'utilisation de l'un ou de l'autre de ces dispositifs est choisie en fonction du type de produit à traiter. Ainsi, l'induction à flux longitudinal convient généralement pour des produits magnétiques dont la température que l'on souhaite obtenir avoisine 750°C (point de Curie) tandis que l'induction à flux transverse est mieux adaptée pour un chauffage à température supérieure, notamment pour des produits amagnétiques.

En outre, lorsqu'il s'agit d'un produit non revêtu qui doit être traité à une température où il risque de s'oxyder, le chauffage à induction doit se faire sous atmosphère protectrice, telle qu'un mélange d'hydrogène et d'azote. Il en résulte que le dispositif de chauffage comprend entre autres une enceinte qui est traversée par le produit à traiter et qui doit être totalement étanche à l'air de manière à éviter toute oxydation du produit.

Dans les applications connues de ce type de chauffage par induction, on utilise des dispositifs de chauffage par induction sous atmosphère protectrice dans lesquels le dispositif de chauffage est placé directement à l'intérieur de l'enceinte étanche. L'étanchéité est donc ainsi réalisée tout autour des moyens d'induction ce qui présente de nombreux inconvénients, notamment lors des opérations d'entretien de ces inducteurs qui nécessitent le démontage de l'enceinte, ou pour la réalisation de l'étanchéité des passages d'arrivée et de retour de courant électrique alimentant les inducteurs et pour ceux des circuits d'eau de refroidissement de ces derniers.

Pour résoudre ce problème, on connaît des applications telles que décrites par exemple dans la demande de brevet européen publiée sous le n° 0 822 733 qui utilise un dispositif de chauffage comprenant des moyens d'induction et une enceinte étanche au gaz disposée autour du produit défilant, entre ce dernier et les inducteurs, ladite enceinte s'étendant dans la direction de défilement du produit, en amont et en aval des inducteurs.

Dans cette demande de brevet européen, l'enceinte d'étanchéité, dans sa partie centrale enclavée par les moyens d'induction proprement dits, est constituée d'un manchon comprenant une ou plusieurs couches de tissu isolant thermiquement et électriquement et revêtu d'un film étanche aux gaz et résistant à une température d'au moins 100°C mais ne dépassant jamais 750°C (dispositif fonctionnant par induction à flux longitudinal).

En revanche, lorsqu'il s'agit de chauffer un produit à une température supérieure à 750°C (par exemple, pour le recuit brillant d'acier inoxydable) en utilisant un dispositif de chauffage par induction à flux transverse ou longitudinal, le manchon divulgué dans ce document n'est plus efficace à de telles températures ce qui risque d'endommager les inducteurs qui typiquement ne doivent pas fonctionner à plus de 100°C.

La présente invention vise donc à pallier de tels inconvénients en proposant une enceinte d'étanchéité au gaz et au vide et électriquement isolante (c'est-à-dire transparente au flux magnétique) couplée à un écran thermiquement isolant qui permet de protéger les moyens d'induction et un éventuel circuit magnétique du dispositif de chauffage par induction électromagnétique, et ceci quel que soit le fonctionnement de ce dernier (flux longitudinal ou flux transverse).

Conformément à l'invention, cette enceinte d'étanchéité au gaz et au vide est disposée autour du produit défilant à chauffer, entre ce dernier et les moyens d'induction du chauffage.

A cet effet, l'enceinte d'étanchéité au gaz et au vide selon l'invention destinée à être utilisée dans un dispositif de chauffage par induction électromagnétique d'un produit défilant à l'intérieur de ladite enceinte, se caractérise en ce qu'elle comporte, au moins dans sa partie centrale entourée par lesdits moyens de chauffage par induction, un fourreau formé d'un matériau étanche au gaz et au vide et électriquement isolant, les faces internes dudit fourreau étant protégées par un écran thermique composé d'une matrice de pavés en matériau thermiquement isolant et d'une pluralité de tubes refroidis par circulation d'un fluide, ces derniers étant emprisonnés dans ladite matrice de pavés.

Le rôle de l'écran thermique est d'assurer une température voisine de 100°C du matériau constituant le fourreau, alors que le produit à chauffer est à une température de l'ordre de 1200°C.

D'autres caractéristiques et avantages de la présente invention ressortiront de la description faite ci-après, en référence aux dessins annexés qui en illustrent un exemple de réalisation dépourvu de tout caractère limitatif. Sur les figures :
- la figure 1 est une vue en coupe tranversale de l'enceinte selon l'invention ;
- la figure 2 est une vue partielle et agrandie d'un détail de la figure 1 ;
- la figure 3 est une vue en coupe selon III-III de la figure 1 ;
- la figure 4 est une vue partielle en coupe selon IV-IV d'un détail de la figure 3 ;
- la figure 5 est une vue schématique illustrant une partie d'une installation de traitement thermique comprenant une enceinte selon l'invention.

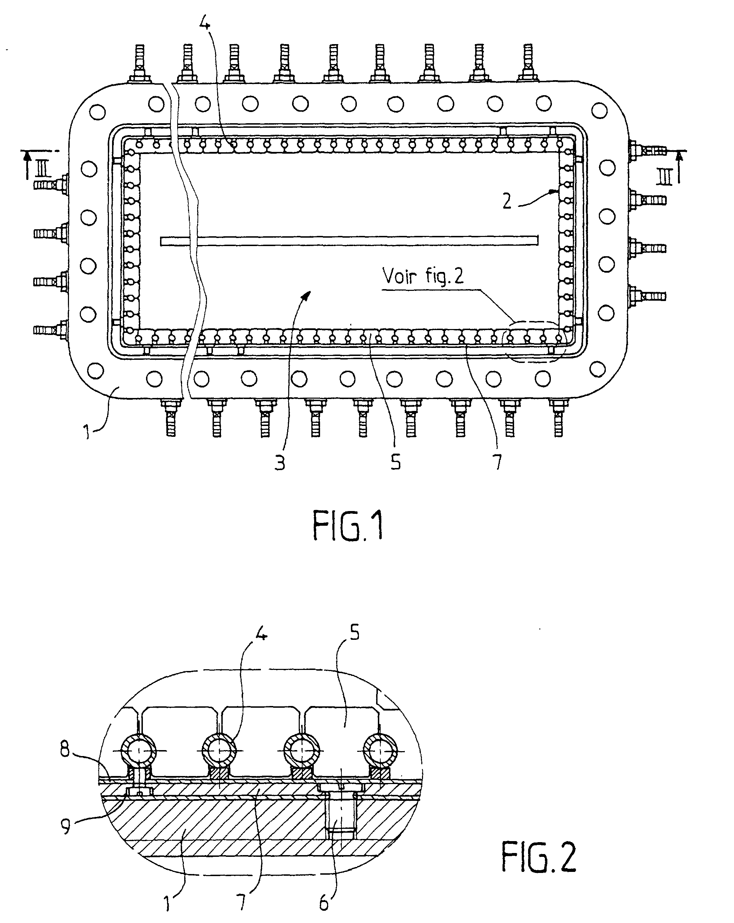

Comme représenté sur les figures 1 à 4, l'enceinte étanche au gaz et au vide et électriquement isolante selon l'invention se présente sous la forme d'un fourreau 1 allongé couplé à un écran thermique 2.

L'espace 3 défini à l'intérieur dudit fourreau est conformé suivant la forme du produit à traiter. Par exemple, le fourreau de forme parallélépipédique illustré par les figures 1 à 4 représente typiquement une application de ce dispositif à une bande à traiter.

Bien entendu, ce type d'enceinte peut également être appliqué à tout autre produit, qu'il soit défilant ou non (fil d'acier, de cuivre, d'aluminium, etc...).

Le fourreau 1 est donc destiné à entourer le produit défilant à traiter et est disposé entre ce dernier et les moyens d'induction du dispositif de chauffage. Il peut s'étendre sur toute la hauteur des moyens d'induction, mais on choisira de préférence un fourreau s'étendant au-delà de ces inducteurs, en amont et en aval de ces derniers, de manière à ne pas chauffer des pièces d'extrémités par le retour du flux d'induction.

Selon l'invention, on prévoit des moyens habituels d'étanchéité au gaz et au vide, respectivement à l'entrée et à la sortie du fourreau, aux extrémités de ce dernier par lesquelles entre et sort la bande à chauffer en déplacement continu. Ces moyens de conception classique n'ont pas été représentés sur les dessins.

Comme illustré à la figure 1, le fourreau 1 selon l'invention est réalisé à partir d'un matériau transparent aux flux magnétique, donc électriquement isolant.

Selon un exemple de réalisation non limitatif de l'invention, ledit fourreau est réalisé par enroulement filamentaire de résine d'époxy ou similaire.

Toutefois, d'autres réalisations sont possibles sans sortir pour autant du cadre de la présente invention et il est possible d'utiliser d'autres matériaux pour réaliser le fourreau, à condition que ces matériaux soient transparents au flux magnétique. Ainsi par exemple, un fourreau en matériau céramique ou en verre pourrait être réalisé selon l'invention.

L'espace 3 intérieur audit fourreau étant rempli d'une atmosphère protectrice (généralement composée d'un mélange d'azote et d'hydrogène) permettant d'éviter toute oxydation du produit pendant le traitement de ce dernier, il est donc nécessaire que le fourreau 1 soit étanche à ces gaz et également au vide.

Par ailleurs, le fourreau doit également être non-conducteur d'électricité pour ne pas être le siège de courant induit par le flux d'induction.

De plus, il possède de bonnes caractéristiques mécaniques, notamment une bonne rigidité, pour supporter l'écran thermique 2 composé d'une pluralité de tubes 4 emprisonnés dans une matrice de pavés 5 en céramique ou similaire, comme décrit ci-après.

En effet, l'écran thermique 2 est constitué d'un assemblage d'une pluralité de tubes 4 disposés sur toutes les faces internes du fourreau 1 et dans lesquels circule un fluide, notamment de l'eau, de manière à refroidir ce dernier.

Dans l'exemple de réalisation avantageux illustré aux figures 1 à 4, lesdits tubes de refroidissement sont uniformément répartis sur toute les faces internes du fourreau 1.

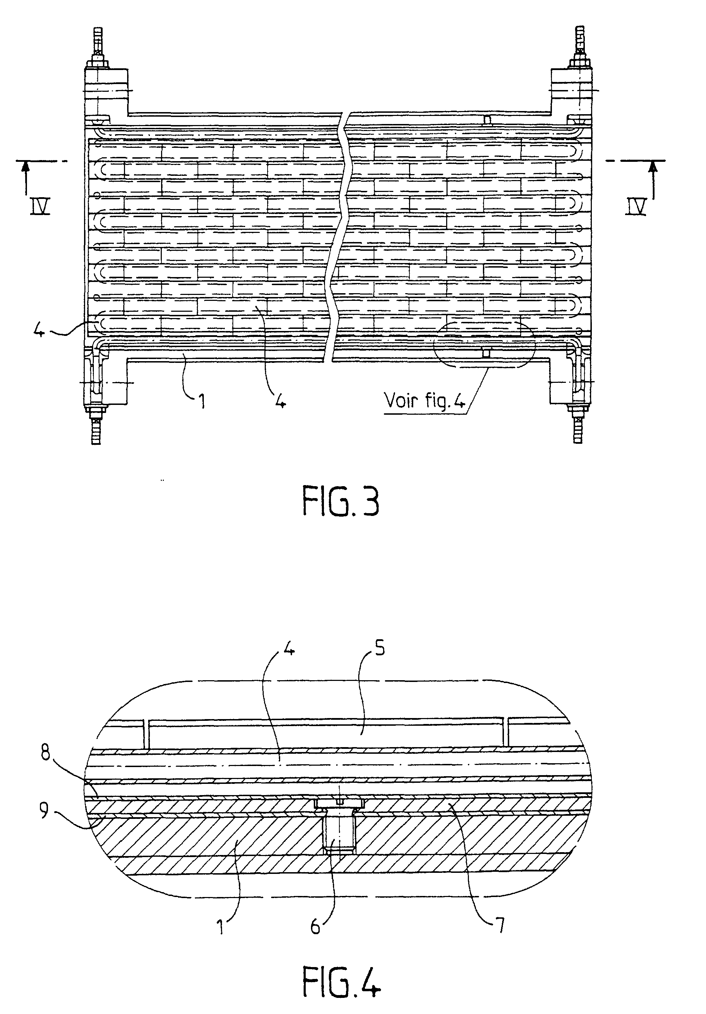

Selon une autre caractéristique avantageuse de l'invention (cf. figure 3), les tubes 4 sont de préférence constitués d'acier inoxydable de faible épaisseur (de l'ordre de 0,5 mm) et ils forment une pluralité d'épingles (configuration en serpentins). Ces tubes peuvent être également réalisés dans un matériau électriquement isolant, donc transparent au flux magnétique, par exemple en verre, en verre-époxy...

En outre, une matrice de pavés 5 réalisés en céramique ou autres matériaux isolants équivalents (béton, etc...) est disposée entre chaque tube 4 de refroidissement afin de couper le rayonnement thermique du produit à traiter.

Lesdits pavés présentent une forme géométrique particulière de sorte qu'ils puissent venir s'enfiler sur ou entre les tubes 4 et ainsi former une matrice venant emprisonner ces derniers, et de manière à ce que lesdits tubes ne soient pas directement en regard du produit défilant.

Le matériau constituant les pavés 5 (céramique, béton, etc...) étant un très bon isolant thermique, ces derniers vont ainsi couper le flux de chaleur rayonné par le produit chauffé.

Par ailleurs, la faible partie de chaleur rayonnée par ledit produit parvenant au niveau des tubes 4 emprisonnés dans lesdits pavés 5 pourra être extraite par échange thermique avec le fluide de refroidissement circulant dans lesdits tubes.

L'écran thermique 2 constitué par l'assemblage des tubes 4 et des pavés 5 est mécaniquement fixé sur la face intérieure du fourreau 1 à l'aide de vis 6 ou moyens de fixation analogues.

On interpose avantageusement entre cet écran thermique et le fourreau 1 une plaque 7 de stratifié de verre (ayant par exemple une épaisseur de l'ordre de 3 mm environ) facilitant ainsi la mise en place et donc la fixation des tubes 4 et pavés 5 sur ledit fourreau, ladite plaque de stratifié 7 étant elle-même disposée entre deux fines couches 8 et 9 de tissu céramique ou similaire.

Bien entendu, pour obtenir un rendement optimal de cet écran thermique, on fera en sorte que lors du montage de celui-ci, il existe un jeu le plus faible possible entre le fourreau 1 et l'écran thermique 2, ainsi qu'entre les tubes 4 et les pavés 5.

On décrira maintenant un exemple d'application de l'enceinte étanche et isolante selon l'invention à une installation de traitement thermique d'une bande défilante.

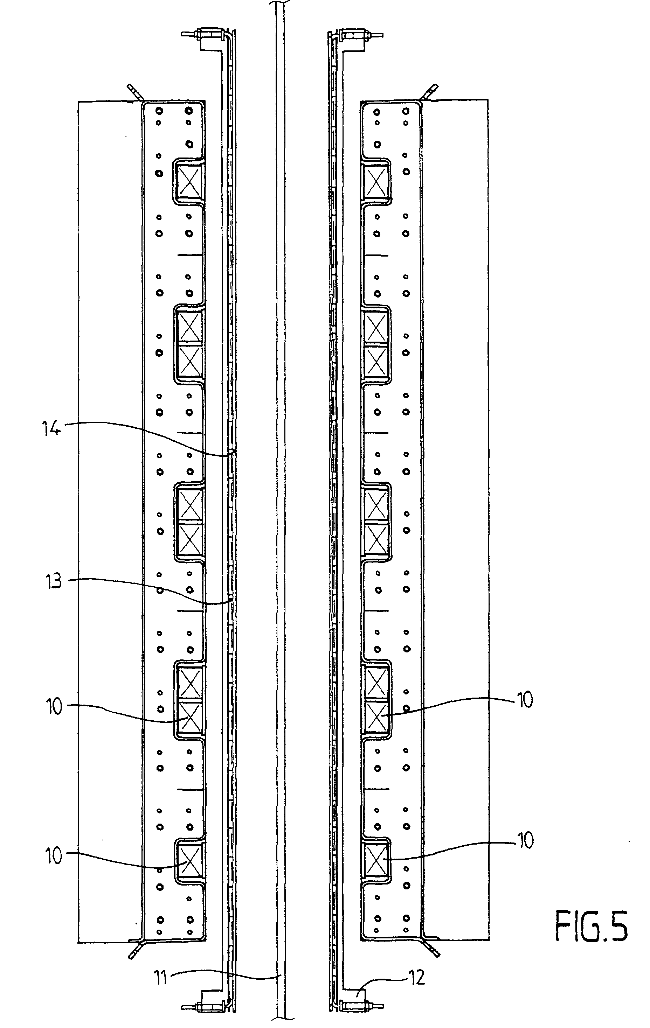

Dans cet exemple, l'installation est destinée au chauffage sous atmosphère protectrice à forte teneur en hydrogène d'une bande défilante d'acier inoxydable. Ce type de traitement thermique requiert typiquement une température de chauffe de l'ordre de 1150°C. Pour y parvenir, on utilise un dispositif de chauffage par induction électromagnétique tel que représenté à la figure 5.

Ce dispositif de chauffage comporte au moins un bobinage 10 parcouru par du courant qui est disposé dans un plan parallèle à la surface de la bande 11 défilante à traiter de sorte que le flux magnétique, transverse, est perpendiculaire à la grande surface de ladite bande. En outre, une enceinte 12 selon l'invention, telle que celle décrite ci-dessus est disposée autour de la bande, entre cette dernière et les bobinages 10 et s'étend de préférence dans un plan perpendiculaire à la direction de défilement de ladite bande, en amont et en aval des spires desdits bobinages.

Les tubes 13 constituant l'écran thermique de ladite enceinte sont alors reliés à un collecteur d'admission et de sortie du fluide de refroidissement, de manière à évacuer une faible partie de la chaleur rayonnée par la bande qui a traversé la matrice 14 de pavés en céramique ou similaire. Ainsi, cette enceinte permet de réaliser une double fonction : elle joue le rôle de caisson d'étanchéité au gaz (ou au vide) nécessaire au traitement de la bande, et elle permet de protéger efficacement ledit fourreau.

Cette enceinte permet également d'intervenir directement sur les bobinages d'induction (notamment lors de l'entretien de ces derniers) sans avoir à rompre l'étanchéité de ladite enceinte. L'enceinte selon l'invention est ainsi parfaitement adaptable à toute installation utilisant une atmosphère protectrice, ou travaillant sous vide.

Il demeure bien entendu que la présente invention n'est pas limitée aux exemples de réalisation décrits et représentés ci-dessus, mais qu'elle en englobe toutes les variantes.

## Revendications

1. Enceinte d'étanchéité au gaz et au vide destinée à être utilisée dans un dispositif de chauffage par induction électromagnétique d'un produit défilant à l'intérieur de ladite enceinte, comportant un fourreau (1) formé d'un matériau électriquement isolant et étanche au gaz et au vide, **caractérisée en ce que** les faces internes dudit fourreau sont protégées par un écran thermique (2) composé d'une matrice de pavés (5) en matériau thermiquement isolant et d'une pluralité de tubes (4) refroidis par circulation d'un fluide, ces derniers étant emprisonnés dans ladite matrice de pavés.

2. Enceinte selon la revendication 1, **caractérisée en ce que** ledit fourreau (1) est réalisé par enroulement filamentaire de résine d'époxy ou similaire.

3. Enceinte selon la revendication 1, **caractérisée en ce que** ledit fourreau (1) est réalisé en matériau céramique ou en verre.

4. Enceinte selon l'une quelconque des revendications 1 à 3, **caractérisée en ce que** lesdits tubes (4) sont uniformément répartis sur toutes les faces internes dudit fourreau.

5. Enceinte selon l'une quelconque des revendications précédentes, **caractérisée en ce que** lesdits tubes (4) forment une pluralité d'épingles, notamment en acier inoxydable de faible épaisseur.

6. Enceinte selon l'une quelconque des revendications 1 à 4, **caractérisée en ce que** lesdits tubes (4) sont réalisés en un matériau électriquement isolant, donc transparent au flux magnétique, notamment en verre, verre-époxy.

7. Enceinte selon l'une quelconque des revendications précédentes, **caractérisée en ce qu'**une plaque (7) de stratifié de verre est disposée entre ledit fourreau (1) et lesdits tubes (4) et pavés (5) de façon à faciliter la mise en place et donc la fixation de ces derniers sur ledit fourreau.

## Patentansprüche

1. Gas- und vakuumdichte Hülle, bestimmt zur Verwendung in einer Vorrichtung zum Erhitzen eines im Inneren des besagten Gehäuses durchlaufenden Produktes durch elektromagnetische Induktion, wobei sie ein Futter (1) umfasst, das aus einem elektrisch isolierenden Material geformt und gas- und vakuumdicht ist, **dadurch gekennzeichnet, dass** die Innenseiten des besagten Futters durch einen Hitzeschild (2) geschützt sind, der aus einer Matrix von Ofensteinen (5) aus einem thermisch isolierenden Material und aus einer Mehrzahl von durch Umlauf einer Flüssigkeit gekühlten Rohren (4) besteht, wobei diese letzteren in besagter Matrix von Ofensteinen eingeschlossen sind.

2. Hülle nach Anspruch 1, **dadurch gekennzeichnet, dass** besagtes Futter (1) durch Wickeln von mit Epoxy-Harz oder gleichartigem Material getränkten Fäden hergestellt ist.

3. Hülle nach Anspruch 1, **dadurch gekennzeichnet, dass** besagtes Futter (1) aus einem keramischen Material oder aus Glas hergestellt ist.

4. Hülle nach einem der vorstehenden Ansprüche 1 bis 3, **dadurch gekennzeichnet, dass** die besagten Rohre (4) gleichmäßig über alle Innenseiten des besagten Futters verteilt sind.

5. Hülle nach einem der vorstehenden Ansprüche, **dadurch gekennzeichnet, dass** die besagten Rohre (4) eine Mehrzahl von Hohlnadeln vorzugsweise aus rostfreiem Stahl mit geringer Dicke bilden.

6. Hülle nach einem der vorstehenden Ansprüche 1 bis 4, **dadurch gekennzeichnet, dass** die besagten Rohre (4) aus einem elektrisch isolierenden, also für den magnetischen Fluss durchlässigen Material, insbesondere aus Glas oder Glas-Harz-Mischung ausgeführt sind.

7. Hülle nach einem der vorstehenden Ansprüche, **dadurch gekennzeichnet, dass** eine Platte (7) aus Verbundglas zwischen dem besagten Futter (1) und den besagten Rohren (4) und Ofensteinen (5) so angeordnet ist, dass das Einsetzen und damit die Befestigung der Ofensteine auf dem besagten Futter vereinfacht wird.

## Claims

1. Enclosure for providing a gas and vacuum seal for use in a device for the electromagnetic induction heating of a product moving within said enclosure, comprising a sleeve (1) formed from an electrically insulating material, which is tight to gas and vacuum, **characterized in that** the inner faces of said sleeve are protected by a heat shield (2) formed from a group of blocks (5) made from a thermally insulating material and a plurality of tubes (4) cooled by the circulation of a fluid, the latter being trapped in said group of blocks.

2. Enclosure according to claim 1, **characterized in that** the sleeve (1) is made by the filamentary winding of an epoxy or similar resin.

3. Enclosure according to claim 1, **characterized in that** the sleeve (1) is made from a ceramic material or glass.

4. Enclosure according to any one of the claims 1 to 3, **characterized in that** said tubes (4) are uniformly distributed over all the inner faces of said sleeve.

5. Enclosure according to any one of the preceding claims, **characterized in that** said tubes (4) form a plurality of pins, particularly of thin stainless steel.

6. Enclosure according to any one of the claims 1 to 4, **characterized in that** said tubes (4) are made from an electrically insulating material, which is therefore transparent to the magnetic flux, particularly of glass or epoxy glass.

7. Enclosure according to any one of the preceding claims, **characterized in that** a glass laminate plate (7) is placed between said sleeve (1) and said tubes (4) and blocks (5), so as to facilitate the putting into place and therefore fixing of the latter on said sleeve.
